# DEMANDE DE BREVET EUROPEEN

(11) **EP 1 821 439 A1**
(43) Date de publication de la demande: **22.08.2007**
(21) Numéro de dépôt: 07101385.8
(22) Date de dépôt: 30.01.2007
(51) Int. Cl.: H04J 14/02, H04Q 11/00

(54) **Dispositif de combinaison/recombinaison de bits pour la protection de trafic dans un noeud d'un réseau de communication**

(30) Priorité: 16.02.2006 FR 0650552
(71) Demandeur: Alcatel Lucent, 75008 Paris (FR)
(72) Inventeur: Douville, Richard, 91310, Longpont sûr Orge (FR); Vigoureux, Martin, 75015, Paris (FR)
(74) Mandataire: Thibaud, Jean-Baptiste

(57) **Abrégé**

Un dispositif (D) est dédié à la combinaison de signaux représentatifs de flux de bits de données, pour un noeud, d'un réseau de communication, comprenant au moins deux ports primaires couplés respectivement à au moins deux canaux de transmission dits de travail (LT1, LT2), au moins un port secondaire connecté à au moins un canal de transmission dit de protection (LP1), et des moyens d'aiguillage (MA) chargés d'aiguiller au moins deux flux respectivement vers les ports primaires. Ce dispositif (D) comprend des moyens de combinaison intercalés entre les moyens d'aiguillage (MA) et les ports primaires et secondaire(s) et comportant au moins un premier étage de porte(s) logique(s) (MC) chargée(s) chacune de combiner de façon synchronisée une fraction d'une paire de signaux (d1, d2) aiguillés vers deux ports primaires choisis, au moyen d'au moins une opération choisie de logique combinatoire, afin de constituer un signal dit composite (p1), représentatif de bits résultant de la combinaison des bits de données représentés par les fractions des signaux (d1, d2) de la paire, et destiné à alimenter un port secondaire dédié.

## Description

L'invention concerne les réseaux de communication mettant en oeuvre un mécanisme de protection de canaux de transmission dits de travail au moyen de canaux de transmission dits de protection.

On entend ici par « canal » aussi bien un canal physique qu'un canal logique.

Comme le sait l'homme de l'art, certains réseaux de communication, notamment optiques, sont pourvus d'un mécanisme de protection permettant de continuer à transmettre des signaux représentatifs de flux de bits de données, alors même que le canal de transmission de travail qu'ils doivent emprunter n'est plus en mesure de les transmettre. Trois types différents de mécanisme de protection sont bien connus.

Un premier type dit « 1+1 » consiste à prévoir un canal de transmission de protection pour chaque canal de transmission de travail. Dans ce cas, chaque noeud du réseau de communication, source de signaux, comprend au moins un port « primaire » connecté à un canal de transmission de travail et un port « secondaire » connecté au canal de transmission de protection associé à ce canal de transmission de travail. Par ailleurs, chaque noeud source (c'est-à-dire qui émet en premier un signal) comprend un pont permanent chargé d'alimenter simultanément les paires de canaux de transmission de travail et de protection associés avec les mêmes signaux représentatifs de flux de trafic normaux, de manière à offrir une haute efficacité en terme de temps de réponse en cas de détection d'un défaut sur le canal de transmission de travail. Chaque noeud du réseau de communication, destinataire des signaux, est alors agencé de manière à sélectionner parmi les signaux reçus par des ports primaire et secondaire associés celui qui présente les meilleures caractéristiques.

Un inconvénient de ce premier type de protection réside dans le fait qu'il est particulièrement onéreux du fait qu'il nécessite de doubler le nombre de canaux de transmission.

On notera que le premier type de protection « 1 +1 » peut être étendu pour un plus haut niveau de « résilience » à un type de protection dit « N+1 » dans lequel N canaux de transmission de protection sont dédiés à la protection d'un seul canal de transmission de travail, afin de pouvoir garantir la réception des signaux au noeud destinataire malgré la détection de défaut sur plusieurs canaux de transmission de protection. Mais, dans ce cas le coût du réseau est encore plus important du fait de la multiplication des canaux de transmission dans le réseau pour supporter un même trafic.

Un deuxième type dit « 1:N » consiste à prévoir un canal de transmission de protection pour N canaux de transmission de travail. Dans ce cas, chaque noeud source du réseau de communication comprend N ports primaires respectivement connectés à N canaux de transmission de travail et un port secondaire connecté au canal de transmission de protection associé à ces N canaux de transmission de travail. Les N canaux de transmission de travail sont dédiés à la transmission de trafics normaux, et le canal de transmission de protection peut être utilisé pour transporter un trafic additionnel lorsqu'il ne sert pas à transporter un trafic normal. Par ailleurs, chaque noeud source de signaux comprend soit un pont de diffusion chargé d'alimenter en permanence avec des trafics normaux les canaux de transmission de travail qui leurs sont dédiés et avec l'un de ces trafics normaux le canal de transmission de protection lorsque le canal de transmission de travail qui lui est dédié n'est pas en mesure de le transmettre ; soit un pont de sélection chargé d'alimenter avec les trafics normaux respectivement les canaux de transmission de travail qui leur sont dédiés lorsqu'ils sont en état de les transmettre ou bien d'alimenter avec l'un quelconque des trafics normaux le canal de transmission de protection lorsque le canal de transmission de travail qui lui est dédié n'est pas en mesure de le transmettre. Chaque noeud destinataire (c'est-à-dire qui est le destinataire d'un signal), du réseau de communication, est alors agencé de manière à sélectionner soit le trafic reçu par un port primaire soit celui reçu par le port secondaire.

Ce deuxième type de protection présente l'avantage d'être beaucoup moins onéreux que le premier type (1+1). Mais, il est beaucoup moins efficace que le premier type en terme de temps de réponse du fait qu'il nécessite, lorsqu'un défaut a été détecté sur un port primaire d'un noeud destinataire, la génération et la prise en compte de messages de signalisation et/ou de messages d'alarmes avertissant le noeud source concerné. En outre, il crée une interruption de service pour le trafic normal contenu dans le signal émis sur le canal de transmission de travail concerné par le défaut jusqu'à son basculement sur le canal de transmission de protection.

Un troisième type dit « M:N » consiste à prévoir M (M>1) canaux de transmission de protection pour protéger N (N>1 et N≥M) canaux de transmission de travail. Dans ce cas, chaque noeud source du réseau de communication comprend N ports primaires respectivement connectés à N canaux de transmission de travail et M ports secondaires respectivement connectés à M canaux de transmission de protection associés à ces N canaux de transmission de travail. Les N canaux de transmission de travail sont dédiés à la transmission de trafics normaux, et les M canaux de transmission de protection peuvent être utilisés pour transporter des trafics additionnels lorsqu'ils ne servent pas à transporter des trafics normaux. Par ailleurs, chaque noeud source comprend soit un pont de diffusion chargé d'alimenter en permanence avec des trafics normaux les canaux de transmission de travail qui leurs sont dédiés et avec zéro à M de ces trafics normaux zéro à M canaux de transmission de protection selon la détection de canaux de travail défaillants ; soit un pont de sélection chargé d'alimenter avec les trafics normaux respectivement les canaux de transmission de travail qui leur sont dédiés lorsqu'ils sont en état de les transmettre ou bien d'alimenter avec zéro à M trafics normaux zéro à M canaux de transmission de protection lorsque le ou les canaux de transmission de travail qui leur sont dédiés ne sont pas en mesure de les transmettre. Chaque noeud de destination du réseau de communication est alors agencé de manière à sélectionner soit le trafic reçu par un port primaire, soit celui reçu par l'un des ports secondaires.

Ce troisième type de protection présente un coût intermédiaire entre ceux des premier et deuxièmes types. Mais, il est moins efficace que le premier type (1+1) en terme de temps de réponse du fait qu'il nécessite également la génération et la prise en compte de messages de signalisation et de messages d'alarmes. En outre, il crée également une interruption de service sur le canal de transmission de travail qui ne peut plus transmettre un trafic normal.

Aucun mécanisme de protection connu n'apportant une entière satisfaction, l'invention a donc pour but d'améliorer la situation.

Elle propose à cet effet un dispositif de combinaison de signaux représentatifs de flux de bits de données pour un noeud (par exemple de type routeur) de réseau de communication, comprenant au moins deux ports primaires couplés respectivement à au moins deux canaux de transmission dits de travail, au moins un port secondaire connecté à au moins un canal de transmission dit de protection, et des moyens d'aiguillage chargés d'aiguiller au moins deux flux respectivement vers les ports primaires.

Ce dispositif de combinaison se caractérise par le fait qu'il comprend des moyens de combinaison intercalés entre ses moyens d'aiguillage et ses ports primaires et secondaire(s) et comportant au moins une porte logique agencée pour combiner de façon synchronisée une fraction d'une paire de signaux aiguillés vers deux ports primaires choisis, au moyen d'au moins une opération choisie de logique combinatoire, afin de constituer un signal dit composite, représentatif de bits résultant de la combinaison des bits de données représentés par les fractions des signaux de la paire, et destiné à alimenter un port secondaire dédié.

Au sens de l'invention, une fraction d'un signal donné désigne un signal ayant le même contenu logique que ce signal donné, mais n'ayant pas nécessairement la même forme de support physique, de codage ou de modulation. Le terme « fraction d'un signal » englobe donc notamment une réplique identique dudit signal.

Selon un mode de réalisation particulier lesdits moyens de combinaison comprennent des portes logiques agencées sur au moins un premier étage et un second étage, ledit second étage comportant au moins une porte logique agencée pour combiner de façon synchronisée une fraction d'une paire de signaux composites constitués par ledit premier étage au moyen d'au moins une opération choisie de logique combinatoire, de manière à constituer un signal composite, représentatif de bits résultant de ladite combinaison des bits composites représentés par les fractions des signaux composites de ladite paire, et destiné à alimenter un port secondaire dédié.

L'invention fournit également un dispositif de recombinaison de signaux représentatifs de flux de bits de données, pour un noeud d'un réseau de communication, ledit noeud comprenant au moins deux ports primaires couplés respectivement à au moins deux canaux de transmission dits de travail, au moins un port secondaire connecté à au moins un canal de transmission dit de protection, caractérisé en ce qu'il comprend des moyens de recombinaison comportant au moins une porte logique agencée pour recombiner de façon synchronisée des fractions d'un premier signal et d'un signal composite reçus par des ports primaire et secondaire choisis, au moyen d'au moins une opération choisie de logique combinatoire, de manière à reconstituer un second signal représentatif de bits, et/ou des fractions de premier et second signaux reçus par des ports primaires choisis, au moyen d'au moins une opération choisie de logique combinatoire, de manière à reconstituer un signal composite représentatif de bits, et/ou des fractions de premier et second signaux composites reçus par des ports secondaires choisis, au moyen d'au moins une opération choisie de logique combinatoire, de manière à reconstituer un troisième signal composite représentatif de bits.

Selon un mode de réalisation particulier, les moyens de recombinaison comprennent des portes logiques agencées sur au moins un premier étage et un second étage, ledit second étage incluant au moins une porte logique agencée pour recombiner de façon synchronisée, des fractions d'un premier signal reçu et d'un signal composite reconstitué par ledit premier étage, au moyen d'au moins une opération choisie de logique combinatoire, de manière à reconstituer un second signal représentatif de bits, et/ou des fractions d'un premier signal composite reconstitué par ledit premier étage et d'un premier signal reçu par un port primaire choisi, au moyen d'au moins une opération choisie de logique combinatoire, de manière à reconstituer un second signal ou un second signal composite représentatif de bits, et/ou des fractions d'un signal composite reçu par un port secondaire choisi et d'un premier signal reconstitué par ledit premier étage, au moyen d'au moins une opération choisie de logique combinatoire, de manière à reconstituer un second signal représentatif de bits.

Selon un autre mode de réalisation particulier, lesdits moyens de recombinaison comprennent au moins une porte logique agencée sur un troisième étage pour combiner de façon synchronisée, des fractions d'un premier signal reçu et d'un signal composite reconstitué par ledit second étage, au moyen d'au moins une opération choisie de logique combinatoire, de manière à reconstituer un second signal représentatif de bits.

Le dispositif de combinaison ou de recombinaison selon l'invention peut comporter d'autres caractéristiques qui peuvent être prises séparément ou en combinaison, et notamment :
- les opérations de logique combinatoire peuvent par exemple être choisies parmi le « OU exclusif » (ou « XOR »), le « NON » (ou « NOT »), le « ET » (ou « AND ») et le « OU » (ou « OR »), et toute combinaison de ces opérations ;
- les opérations de logique combinatoire sont de préférence inversibles ;
- chaque étage de porte(s) logique(s) peut être chargé de combiner chaque bit de la fraction de l'un des signaux d'une paire à un bit correspondant de la fraction de l'autre signal de cette paire ;
- en variante, il peut comprendre des moyens de groupement chargés de décomposer les flux en groupes de bits comportant un nombre choisi de bits. Dans ce cas, chaque étage de porte(s) logique(s) est chargé de (re)combiner chaque groupe de bits de la fraction de l'un des signaux (éventuellement composite) d'une paire à un groupe de bits correspondant de la fraction de l'autre signal (éventuellement composite) de cette paire.

L'invention propose également un noeud, pour un réseau de communication, comprenant au moins deux ports primaires couplés respectivement à au moins deux canaux de transmission dits de travail, au moins un port secondaire connecté à au moins un canal de transmission dit de protection, des moyens d'aiguillage chargés d'aiguiller au moins deux flux pour les aiguiller respectivement vers les ports primaires et/ou secondaire(s), et un dispositif de combinaison/recombinaison du type de celui présenté ci-avant.

L'invention fournit également un procédé pour transmettre des signaux représentatifs de flux de bits de données de manière protégée à un noeud récepteur par un réseau de communication, caractérisé par les étapes consistant à :
sélectionner un groupe à protéger comportant une pluralité de signaux représentatifs de bits de données destinés à être transmis de manière protégée audit noeud récepteur,
former un groupe de protection, associé audit groupe à protéger, incluant au moins un signal composite de protection, ledit groupe de protection étant obtenu en combinant de façon synchronisée, par une séquence logique de combinaison incluant au moins une opération choisie de logique combinatoire, chacun des signaux dudit groupe à protéger avec un autre signal du groupe à protéger ou avec un signal composite précédemment obtenu du groupe de protection, ledit au moins un signal composite étant à chaque fois représentatif de bits résultant de ladite combinaison des bits de données représentés par les signaux soumis à ladite au moins une opération de logique combinatoire,
transmettre ledit au moins un signal composite dudit groupe de protection et lesdits signaux dudit groupe à protéger audit noeud récepteur sur des canaux de transmission du réseau de communication mutuellement séparés.

Avantageusement, le groupe de protection comporte au moins deux signaux composites obtenus à partir d'un signal du groupe à protéger. Une telle redondance augmente les possibilités combinatoires de récupération du signal à protéger, et fait donc baisser les risques d'une perte de ce signal, même en cas de défaillance simultanée de plusieurs canaux.

L'invention fournit également un procédé de récupération de données protégées pour un noeud récepteur d'un réseau de communication, comprenant les étapes consistant à :
détecter une défaillance d'un canal de transmission agencé pour transporter un signal représentatif de bits de données jusqu'au noeud récepteur,
identifier un groupe à protéger auquel appartient le signal transporté par le canal de transmission défaillant, ledit groupe à protéger incluant une pluralité de signaux transportés par des canaux de transmission connectés audit noeud récepteur,
identifier un groupe de protection associé audit groupe à protéger, ledit groupe de protection incluant au moins un signal composite de protection transporté par au moins un canal de transmission connecté audit noeud récepteur, ledit au moins un signal composite de protection étant obtenu en amont dudit au moins un canal de transmission en combinant de façon synchronisée chacun des signaux dudit groupe à protéger, par au moins une opération choisie de logique combinatoire, avec un autre signal du groupe à protéger ou avec un signal composite précédemment obtenu du groupe de protection, ledit au moins un signal composite étant à chaque fois représentatif de bits résultant de ladite combinaison des bits de données représentés par les signaux soumis à ladite au moins une opération de logique combinatoire,
recombiner de façon synchronisée des signaux effectivement reçus par le noeud récepteur, s'il en existe, au moyen d'une séquence logique de recombinaison incluant au moins une opération choisie de logique combinatoire, lesdits signaux étant choisis parmi les signaux dudit groupe à protéger et dudit groupe de protection, de manière à récupérer le signal transporté par le canal de transmission défaillant.

L'invention fournit ainsi une nouvelle manière de protéger N canaux de travail, correspondant aux signaux du groupe à protéger (N≥2), par M canaux de protection, correspondant au signal ou signaux du groupe de protection (M≥1). Ce type de protection peut être désigné par M+N.

D'autres caractéristiques et avantages de l'invention apparaîtront à l'examen de la description détaillée ci-après de plusieurs modes de réalisation de l'invention, donnée à titre purement illustratif et non limitatif en référence aux dessins annexés. Sur ces dessins :

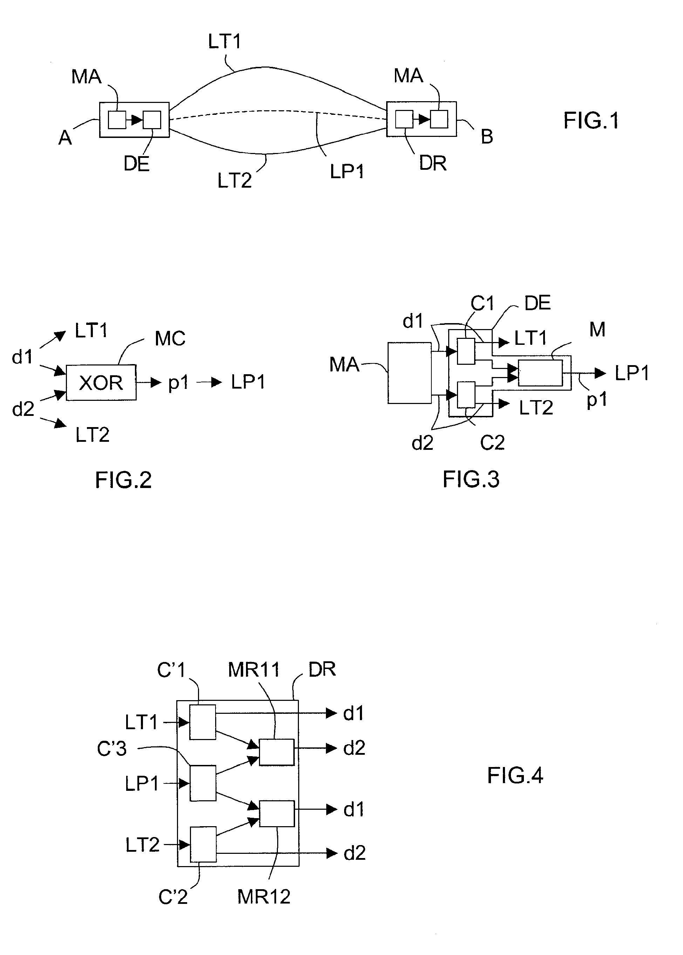

- la figure 1 illustre de façon très schématique deux noeuds d'un réseau de communication selon un premier mode de réalisation, équipés respectivement d'un dispositif de combinaison de flux et d'un dispositif de recombinaison de flux et connectés l'un à l'autre par deux canaux de transmission de travail et un canal de transmission de protection,
- la figure 2 illustre de façon très schématique un exemple de fonction de combinaison de bits de deux signaux (d1 et d2) au moyen d'une opération logique de type OU exclusif (XOR), en vue de générer un signal composite (p1) à transmettre,
- la figure 3 illustre de façon très schématique un exemple de réalisation de moyens de combinaison propres à mettre en oeuvre la fonction illustrée sur la figure 2, au sein d'un dispositif de combinaison, équipant l'un des noeuds illustrés sur la figure 1,
- la figure 4 illustre de façon très schématique un exemple de réalisation de moyens de recombinaison propres à reconstituer deux signaux (d1 et d2) à partir d'un signal composite (p1) reçu, au sein d'un dispositif de recombinaison, équipant l'un des noeuds illustrés sur la figure 1,

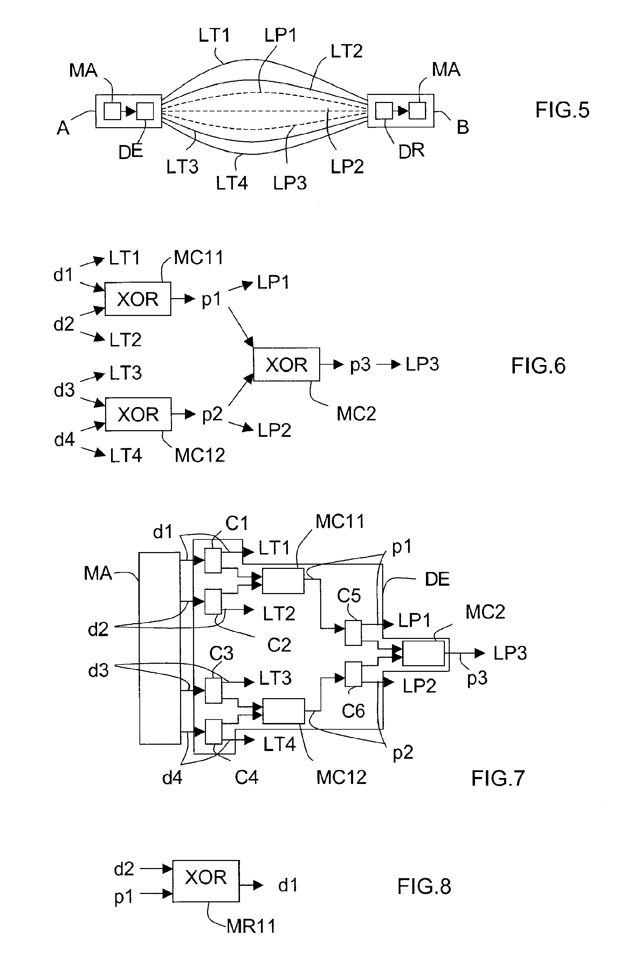

- la figure 5 illustre de façon très schématique deux noeuds d'un réseau de communication selon un deuxième mode de réalisation, équipés respectivement d'un dispositif de combinaison de flux et d'un dispositif de recombinaison de flux et connectés l'un à l'autre par quatre canaux de transmission de travail et trois canaux de transmission de protection,
- la figure 6 illustre de façon très schématique un exemple de fonctions de combinaison de bits de paires de signaux (d1 et d2, et d3 et d4) et de signaux composites (p1 et p2), au moyen d'opérations logiques de type OU exclusif (XOR), en vue de générer trois signaux composites (p1, p2 et p3) à transmettre,
- la figure 7 illustre de façon très schématique un exemple de réalisation de moyens de combinaison propres à mettre en oeuvre les fonctions illustrées sur la figure 6, au sein d'un dispositif de combinaison, équipant l'un des noeuds illustrés sur la figure 5,

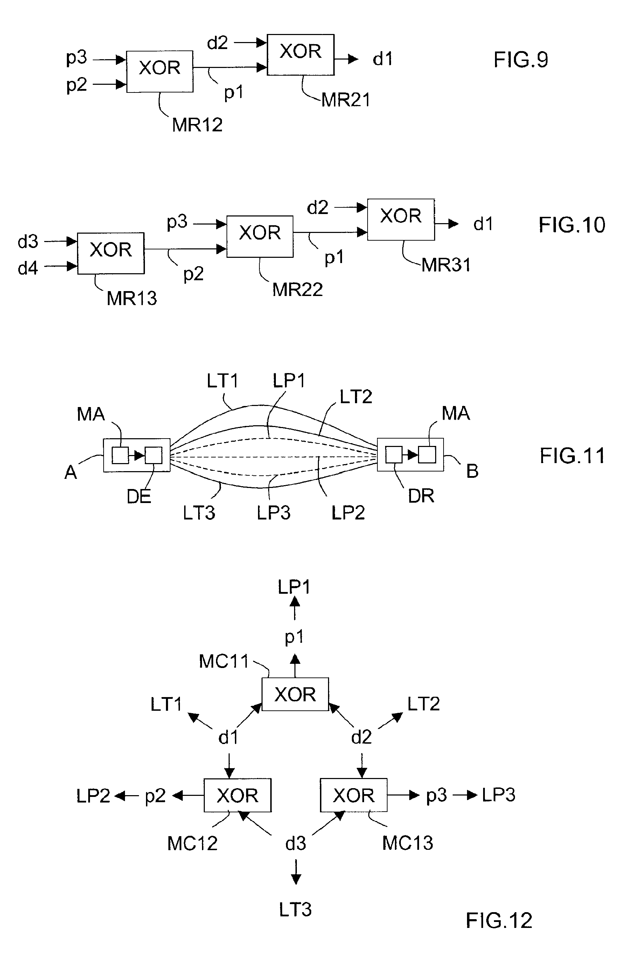

- la figure 8 illustre de façon très schématique un premier exemple de fonction de combinaison de bits d'un signal (d2) reçu et d'un signal composite (p1) reçu, au moyen d'une opération logique de type OU exclusif (XOR), en vue de retrouver un signal (d1) transmis, pouvant être mise en oeuvre par des moyens de recombinaison équipant un noeud illustré sur la figure 5 ou sur la figure 11,
- la figure 9 illustre de façon très schématique un deuxième exemple de fonctions de combinaison de bits d'un signal (d2) reçu et de deux signaux composites (p2 et p3) reçus, au moyen d'opérations logiques de type OU exclusif (XOR), en vue de retrouver un signal (d1) transmis, pouvant être mise en oeuvre par des moyens de recombinaison équipant l'un des noeuds illustrés sur la figure 5,
- la figure 10 illustre de façon très schématique un troisième exemple de fonctions de combinaison de bits de trois signaux (d2, d3 et d4) reçus et d'un signal composite (p3) reçu, au moyen d'opérations logiques de type OU exclusif (XOR), en vue de retrouver un signal (d1) transmis, pouvant être mise en oeuvre par des moyens de recombinaison équipant l'un des noeuds illustrés sur la figure 5,
- la figure 11 illustre de façon très schématique deux noeuds d'un réseau de communication selon un troisième mode de réalisation, équipés respectivement d'un dispositif de combinaison de flux et d'un dispositif de recombinaison de flux et connectés l'un à l'autre par trois canaux de transmission de travail et trois canaux de transmission de protection,
- la figure 12 illustre de façon très schématique un exemple de fonctions de combinaison de bits de paires de signaux (d1 et d2, d1 et d3, et d2 et d3), au moyen d'opérations logiques de type OU exclusif (XOR), en vue de générer trois signaux composites (p1, p2 et p3) à transmettre,

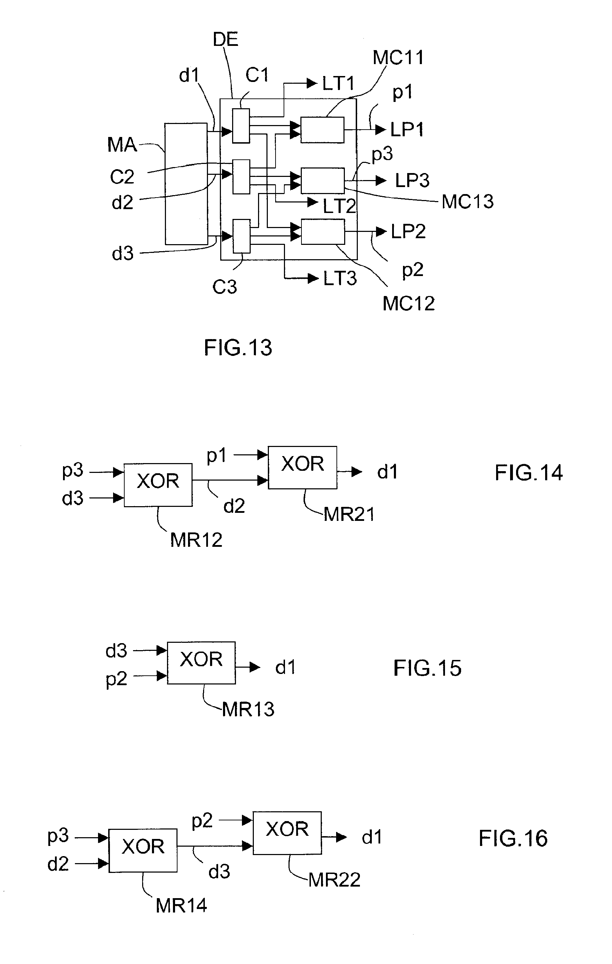

- la figure 13 illustre de façon très schématique un exemple de réalisation de moyens de combinaison propres à mettre en oeuvre les fonctions illustrées sur la figure 12, au sein d'un dispositif de combinaison équipant l'un des noeuds illustrés sur la figure 11,
- la figure 14 illustre de façon très schématique un deuxième exemple de fonctions de combinaison de bits d'un signal (d3) reçu et de deux signaux composites (p1 et p3) reçus, au moyen d'opérations logiques de type OU exclusif (XOR), en vue de retrouver un signal (d1) transmis, pouvant être mise en oeuvre par des moyens de recombinaison équipant l'un des noeuds illustrés sur la figure 11,
- la figure 15 illustre de façon très schématique un troisième exemple de fonction de combinaison de bits d'un signal (d3) reçu et d'un signal composite (p2) reçu, au moyen d'une opération logique de type OU exclusif (XOR), en vue de retrouver un signal (d1) transmis, pouvant être mise en oeuvre par des moyens de recombinaison équipant l'un des noeuds illustrés sur la figure 11,
- la figure 16 illustre de façon très schématique un quatrième exemple de fonctions de combinaison de bits d'un signal (d2) reçu et de deux signaux composites (p2 et p3) reçus, au moyen d'opérations logiques de type OU exclusif (XOR), en vue de retrouver un signal (d1) transmis, pouvant être mise en oeuvre par des moyens de recombinaison équipant l'un des noeuds illustrés sur la figure 11.

Les dessins annexés pourront non seulement servir à compléter l'invention, mais aussi contribuer à sa définition, le cas échéant.

Dans ce qui suit, on considère à titre d'exemple non limitatif que le réseau de communication est un réseau optique et donc que les signaux représentatifs de flux de bits de données sont des signaux optiques. Mais, l'invention n'est pas limitée à ce type de réseau. Elle concerne en effet tout type de réseau dans lequel les noeuds sont connectés les uns aux autres par au moins deux canaux de transmission de travail et au moins un canal de transmission de protection permettant la mise en oeuvre d'un mécanisme de protection.

Un réseau (ici optique) peut se résumer, de façon schématique mais suffisante à la compréhension de l'invention, à des noeuds, tels que des routeurs, connectés les uns aux autres par au moins deux canaux de travail et au moins un canal de protection. Chaque canal de travail est dédié au transport de signaux optiques représentatifs d'un flux de bits de données. Par ailleurs, chaque noeud comprend au moins deux ports dits « primaires » connectés respectivement aux canaux de travail et au moins un port dit « secondaire » connecté à un canal de protection. En outre, chaque noeud comprend un module d'aiguillage chargé d'aiguiller les signaux optiques qu'il reçoit, et qui sont représentatifs d'au moins deux flux différents, respectivement vers les ports primaires.

Dans les modes de réalisation décrits, on considère un noeud émetteur A devant transmettre des signaux à un noeud récepteur B. L'invention propose d'équiper les noeuds du réseau, que l'on désire connecter par des canaux de transmission protégés par une protection de type M+N, d'un dispositif de combinaison au niveau du noeud émetteur et d'un dispositif de recombinaison de signaux au niveau du noeud récepteur. Bien sûr, un noeud peut posséder à la fois les fonctions d'émetteur et de récepteur.

Ce dispositif de combinaison (DE) comprend des moyens de combinaison intercalés entre son module d'aiguillage et ses ports primaires et secondaire(s) et comportant au moins un étage de porte(s) logique(s). Chaque porte logique est chargée de combiner de façon synchronisée une fraction d'une paire de signaux aiguillés par le module d'aiguillage vers deux ports primaires choisis de son noeud. La synchronisation est destinée à tenir compte des différences de temps de transmission des signaux (optiques) via deux canaux de travail différents. A cet effet, on peut par exemple utiliser des lignes à retard destinées à introduire des délais de longueurs prédéterminées de manière à avancer ou retarder les bits de certains signaux par rapport aux bits de certains autres signaux. En variante, on peut utiliser des mémoires (électroniques) tampons.

Cette combinaison se fait au moyen d'au moins une opération choisie de logique combinatoire, choisie parmi le « OU exclusif » (ou « XOR »), le « NON » (ou « NOT »), le « ET » (ou « AND ») et le « OU » (ou « OR ») et leurs combinaisons, par exemple « NON OU exclusif » (NOT XOR).

Par ailleurs, une combinaison synchronisée des bits de deux signaux est destinée à constituer un signal dit « composite », représentatif de bits résultant de la combinaison des bits de données représentés par les fractions des deux signaux.

En outre, un signal composite est destiné à alimenter un port secondaire dédié du noeud dans lequel il est constitué.

On considère dans ce qui suit que toutes les opérations de logique combinatoire sont des OU exclusifs (ou XORs). La table de vérité d'une opération de type OU exclusif est donnée ci-après pour deux bits b1 et b2 pouvant prendre les valeurs binaires 0 et 1 :

| b1 | b2 | Résultat |
|---|---|---|
| 0 | 0 | 0 |
| 0 | 1 | 1 |
| 1 | 0 | 1 |
| 1 | 1 | 0 |

Autrement dit, on a les relations suivantes :
0 XOR 0 = 0, 0 XOR 1=1,1 XOR 0 = 1 et 1 XOR 1 =0.

Une combinaison de signaux peut se faire soit bit à bit, soit groupe de bits à groupe de bits. Dans ce dernier cas, le dispositif DE doit comporter des moyens de groupement chargés de décomposer les flux à combiner, en amont de ses moyens de combinaison, en groupes de bits comportant un nombre choisi de bits (par exemple 4 ou 5 bits), afin qu'ils soient combinés par groupe, de façon synchronisée.

Un premier exemple très schématique d'interconnexion entre deux noeuds A et B. est illustré sur la figure 1. Le noeud émetteur A est équipé d'un module d'aiguillage MA et d'un dispositif de combinaison DE. Le noeud récepteur B est équipé d'un dispositif de recombinaison DR. Un module d'aiguillage MA peut aussi être prévu au niveau du noeud récepteur B pour router ou commuter les signaux reçus vers un autre destination. Dans cet exemple, les noeuds A et B sont connectés par l'intermédiaire de deux canaux de travail LT1 et LT2 et d'un canal de protection LP1. A cet effet, chaque noeud A, B comprend deux ports dits primaires connectés respectivement aux canaux de travail LT1 et LT2 et un port dit secondaire connecté canal de protection LP1. Le premier canal de travail LT1 est dédié au transport de premiers signaux d1 représentatifs d'un premier flux de bits de données (trafic normal), le second canal de travail LT2 est dédié au transport de seconds signaux d2 représentatifs d'un second flux de bits de données (trafic normal), et le canal de protection LP1 est dédié au transport de signaux composites p1 représentatifs de bits de données résultant de la combinaison des bits de données représentés par des fractions des premiers d1 et second d2 signaux.

Afin de faciliter la description de l'invention, on appelle ci-après « signal primaire » un signal quelconque, portant un contenu logique, aiguillé par un module d'aiguillage MA et destiné à être transporté par un canal de travail LT.

On a schématiquement représenté sur la figure 2 un exemple de fonction de combinaison de bits des premiers d1 et second d2 signaux primaires au moyen d'une porte logique MC chargée d'effectuer une opération logique de type OU exclusif (XOR). Plus précisément, la porte logique MC reçoit en entrée les premiers d1 et second d2 signaux primaires qui doivent être respectivement transportés par les premier LT1 et second LT2 canaux de travail, et délivre en sortie un signal composite p1 devant être transporté par le canal de protection LP1.

Pour mettre en oeuvre la fonction de combinaison illustrée sur la figure 2, on peut par exemple utiliser un dispositif DE du type de celui illustré sur la figure 3. Dans cet exemple, le dispositif DE comprend de préférence deux coupleurs C1 et C2, de type 1x2 (une entrée et deux sorties), alimentés respectivement en deux signaux primaires d1 et d2 par le module d'aiguillage MA et délivrant respectivement sur leurs deux sorties deux fractions complémentaires du premier d1 ou second d2 signal primaire reçu en entrée. L'une des deux sorties est connectée à l'un des ports primaires pour alimenter en premier d1 ou second d2 signal primaire le premier LT1 ou second LT2 canal de travail, l'autre sortie est connectée à l'entrée de la porte logique MC. En variante, on peut utiliser toute autre forme de module de combinaison assurant une fonction similaire, par exemple sur plusieurs octets en parallèle, après qu'une conversion électrique du signal a été effectuée. Un module de combinaison pourrait aussi être réalisé sous une forme de composant optique pour traiter les signaux optique sans conversion électrique ni démodulation.

A titre d'exemple purement illustratif, si l'on considère la suite de bits 1101 du premier signal primaire d1, et la suite de bits 0110 du second signal primaire d2, alors la suite de bits du signal composite p1, qui résulte de la combinaison bit à bit par une opération logique de type XOR des premier d1 et second d2 signaux primaires et qui est délivrée par le module de combinaison, est égale à 1011.

La sortie du module de combinaison alimente en signal composite p1 le port secondaire du noeud, qui est connecté au canal de protection LP1.

Par conséquent, les premier d1 et second d2 signaux primaires et le signal composite p1 sont transmis du noeud A vers le noeud B via respectivement les premier LT1 et second LT2 canaux de travail et le canal de protection LP1, de façon synchronisée par le dispositif D.

Si aucun canal de travail LT1 et LT2 n'est défaillant et si le canal de protection LP1 n'est pas défaillant, alors le noeud B va recevoir les premier d1 et second d2 signaux primaires sur ses deux ports primaires (connectés aux premier LT1 et second LT2 canaux de travail) et le signal composite p1 (représentatif simultanément de d1 et d2) sur son port secondaire (connecté au canal de protection LP1).

Si seul le canal de protection LP1 est défaillant, cela ne pose pas de problème au noeud B puisqu'il peut recevoir normalement les premier d1 et second d2 signaux primaires.

En revanche, si l'un des premier LT1 et second LT2 canaux de travail est défaillant mais que le canal protection LP1 n'est pas défaillant, le noeud B est en mesure de reconstituer le signal primaire d1 ou d2 qu'il n'a pas reçu à partir du signal composite p1 et de l'autre signal primaire d1 ou d2 correctement reçu.
- A cet effet, le dispositif DR comprend des moyens de recombinaison (MR) intercalés entre les ports primaires et secondaire(s) du noeud B et le module d'aiguillage MA.

Cette recombinaison se fait au moyen d'au moins une opération choisie de logique combinatoire, permettant d'inverser celle effectuée par les moyens de combinaison MC du dispositif DE ayant généré le signal composite dans le noeud émetteur A.

Dans l'exemple de configuration illustré sur la figure 1, on peut par exemple utiliser un dispositif DR du type de celui illustré sur la figure 4 pour procéder à la recombinaison de signaux.

Dans cet exemple, le dispositif DR comprend de préférence trois coupleurs C'1, C'2 et C'3, de type 1x2 (une entrée et deux sorties), connectés respectivement aux premier LT1 et second LT2 canaux de travail et au canal de protection LP1. Le coupleur C'1 reçoit donc sur son entrée le premier signal primaire d1 et délivre sur ses deux sorties deux fractions complémentaires du premier signal primaire d1. Le coupleur C'2 reçoit sur son entrée le second signal primaire d2 et délivre sur ses deux sorties deux fractions complémentaires du second signal primaire d2. Le coupleur C'3 reçoit sur son entrée le signal composite p1 et délivre sur ses deux sorties deux fractions complémentaires du signal composite p1.

Le dispositif DR comprend une première porte logique MR11 comprenant deux entrées couplées respectivement à l'une des deux sorties de chacun des coupleurs C'1 et C'3, et une seconde porte logique MR12 comprenant deux entrées couplées respectivement à l'une des deux sorties de chacun des coupleurs C'2 et C'3. Les moyens de recombinaison comprennent donc ici un seul étage de portes logiques.

La première porte logique MR11 reçoit donc en entrée le premier signal primaire d1 et le signal composite p1, et délivre en sortie le second signal primaire d2, tandis que la seconde porte logique MR12 reçoit en entrée le second signal primaire d2 et le signal composite p1, et délivre en sortie le premier signal primaire d1.

En effet, si l'on a initialement combiné les premier d1 et second d2 signaux primaires au moyen d'une opération de type OU exclusif (d1 XOR d2 = p1), alors le premier signal d1 peut être reconstitué au moyen d'une même opération de type OU exclusif appliquée au second signal primaire d2 et au signal composite p1 (d2 XOR p1 = d1) tandis que le second signal d2 peut être reconstitué au moyen d'une même opération de type OU exclusif appliquée au premier signal primaire d1 et au signal composite p1 (d1 XOR p1 = d2).

Si l'on reprend l'exemple de suites de bits présenté ci-avant à titre illustratif (d1 = 1101, d2 = 0110 et p1 = 1011), on peut vérifier qu'en effectuant l'opération d2 XOR p1 on retrouve bien d1 tandis qu'en effectuant l'opération d1 XOR p1 on retrouve bien d2.

Ainsi, grâce aux dispositifs DE et DR permettant une combinaison des signaux à l'émission et recombinaison des signaux à la réception, on peut partager des ressources de protection pour transmettre de façon combinée des signaux primaires transportés par ailleurs par des canaux de travail.

Il est important de noter que la recombinaison se fait de façon synchronisée et soit bit à bit, soit groupe de bits à groupe de bits, selon le mode de combinaison utilisé en amont.

Ce mode de réalisation permet le partage, au sein du réseau de communication, des ressources de protection entre plusieurs canaux de transmission de travail, tout en offrant un niveau de service de protection au moins aussi bon que celui offert par un mécanisme de protection de type 1 +1. En particulier, aucune interruption de service n'est produite lors de la récupération du signal d1 comme expliqué ci-dessus. De préférence, au sein d'un réseau multiprotocole à commutation d'étiquettes MPLS, un groupe de canaux à protéger, à savoir ici les canaux LT1 et LT2, est constitué en choisissant des canaux appartenant à des groupes de partage de risque disjoints (Share Risk Link Group). Ainsi, le risque de perdre simultanément les deux canaux LT1 et LT2 est minimisé.

Des exemples de réalisation de moyens de combinaison (C, MC) et de moyens de recombinaison (C', MR) plus sophistiqués peuvent être requis lorsque le nombre de canaux de travail LT est strictement supérieur à deux (2) et/ou lorsque le nombre de canaux de protection LP est strictement supérieur à un (1). Deux de ces exemples vont maintenant être décrits en référence aux figures 5 à 16.

Dans l'exemple illustré sur la figure 5, les noeuds A et B sont connectés par l'intermédiaire de quatre canaux de travail LT1 à LT4 et de trois canaux de protection LP1 à LP3. A cet effet, chaque noeud A, B comprend quatre ports primaires connectés respectivement aux canaux de travail LT1, LT2, LT3 et LT4 et trois ports secondaires connectés respectivement aux canaux de protection LP1, LP2 et LP3. Le premier canal de travail LT1 est dédié au transport de premiers signaux primaires d1 représentatifs d'un premier flux de bits de données (trafic normal). Le deuxième canal de travail LT2 est dédié au transport de deuxièmes signaux primaires d2 représentatifs d'un second flux de bits de données (trafic normal). Le troisième canal de travail LT3 est dédié au transport de troisièmes signaux primaires d3 représentatifs d'un troisième flux de bits de données (trafic normal). Le quatrième canal de travail LT4 est dédié au transport de quatrièmes signaux primaires d4 représentatifs d'un quatrième flux de bits de données (trafic normal). Le premier canal de protection LP1 est dédié au transport de premiers signaux composites p1 représentatifs de bits de données résultant de la combinaison des bits de données représentés par des fractions de premier d1 et second d2 signaux primaires. Le deuxième canal de protection LP2 est dédié au transport de deuxièmes signaux composites p2 représentatifs de bits de données résultant de la combinaison des bits de données représentés par des fractions de troisième d3 et quatrième d4 signaux primaires. Le troisième canal de protection LP3 est dédié au transport de troisièmes signaux composites p3 représentatifs de bits de données résultant de la combinaison des bits composites représentés par des fractions de premier p1 et deuxième p2 signaux composites.

Dans cet exemple, et comme cela est illustré sur la figure 6, les moyens de combinaison (MC) du noeud A comprennent deux étages de modules de combinaison (par exemple des portes logiques) chargés chacun d'effectuer une opération de logique combinatoire et associés chacun à deux coupleurs.

Plus précisément, chaque porte logique du second étage est chargée de combiner de façon synchronisée une fraction d'une paire de signaux composites au moyen d'au moins une opération choisie de logique combinatoire, afin de constituer un autre signal composite, représentatif de bits résultant de la combinaison des bits composites représentés par les fractions des signaux composites de la paire, et destiné à alimenter un port secondaire dédié du noeud.

Comme dans l'exemple précédemment décrit en référence aux figures 1 à 4, les opérations de logique combinatoire sont par exemple toutes de type OU exclusif (XOR).

On a schématiquement représenté sur la figure 6 un exemple de fonctions de combinaison de bits, d'une première part, des premier d1 et deuxième d2 signaux primaires au moyen d'une première porte logique MC11 chargée d'effectuer une opération logique de type OU exclusif (XOR) pour délivrer un premier signal composite p1 (d1 XOR d2 = p1), d'une deuxième part, des troisième d3 et quatrième d4 signaux primaires au moyen d'une deuxième porte logique MC12 chargée d'effectuer une opération logique de type OU exclusif (XOR) pour délivrer un second signal composite p2 (d3 XOR d4 = p2), et d'une troisième part, des premier p1 et second p2 signaux composites (délivrés par les première MC11 et deuxième MC12 portes logiques) au moyen d'une troisième porte logique MC2 chargée d'effectuer une opération logique de type OU exclusif (XOR) pour délivrer un troisième signal composite p3 (p1 XOR p2 = p3).

Plus précisément :
- la première porte logique MC11 reçoit en entrée les premier d1 et second d2 signaux primaires qui doivent être respectivement transportés par les premier LT1 et second LT2 canaux de travail, et délivre en sortie un premier signal composite p1 devant être transporté par le premier canal de protection LP1,
- la deuxième porte logique MC12 reçoit en entrée les troisième d3 et quatrième d4 signaux primaires qui doivent être respectivement transportés par les troisième LT3 et quatrième LT4 canaux de travail, et délivre en sortie un deuxième signal composite p2 devant être transporté par le deuxième canal de protection LP2,
- la troisième porte logique MC2 reçoit en entrée les premier p1 et deuxième p2 signaux composites qui doivent être respectivement transportés par les premier LP1 et deuxième LP2 canaux de protection, et délivre en sortie un troisième signal composite p3 devant être transporté par le troisième canal de protection LP3.

Pour mettre en oeuvre les fonctions de combinaison illustrées sur la figure 6, on peut par exemple utiliser un dispositif D du type de celui illustré sur la figure 7. Dans cet exemple, le dispositif D comprend de préférence :
- deux coupleurs C1 et C2, de type 1x2, alimentés respectivement en premier d1 et deuxième d2 signaux primaires par le module d'aiguillage MA et délivrant chacun sur leurs deux sorties deux fractions complémentaires du premier d1 ou deuxième d2 signal primaire reçu en entrée. L'une des deux sorties est connectée à l'un des ports primaires pour alimenter en premier d1 ou deuxième d2 signal primaire le premier LT1 ou deuxième LT2 canal de travail, l'autre sortie est connectée à l'entrée de la première porte logique MC11 (du premier étage des moyens de combinaison),
- deux coupleurs C3 et C4, de type 1x2, alimentés respectivement en troisième d3 et quatrième d4 signaux primaires par le module d'aiguillage MA et délivrant chacun sur leurs deux sorties deux fractions complémentaires du troisième d3 ou quatrième d4 signal primaire reçu en entrée. L'une des deux sorties est connectée à l'un des ports primaires pour alimenter en troisième d3 ou quatrième d4 signal primaire le troisième LT3 ou quatrième LT4 canal de travail, l'autre sortie est connectée à l'entrée de la deuxième porte logique MC12 (du premier étage des moyens de combinaison),
- deux coupleurs C5 et C6, de type 1x2, alimentés respectivement en premier p1 et deuxième p2 signaux composites par les sorties des première MC11 et seconde MC12 portes logiques, et délivrant chacun sur leurs deux sorties deux fractions complémentaires du premier p1 ou deuxième p2 signal composite reçu en entrée. L'une des deux sorties est connectée à l'un des ports secondaires pour alimenter en premier p1 ou deuxième p2 signal composite le premier LP1 ou deuxième LP2 canal de protection. L'autre sortie est connectée à l'entrée de la troisième porte logique MC2 (du second étage des moyens de combinaison).

Les premier d1, deuxième d2, troisième d3 et quatrième d4 signaux primaires et les premier p1, deuxième p2 et troisième p3 signaux composites sont transmis du noeud A vers le noeud B via respectivement les premier LT1, deuxième LT2, troisième LT3 et quatrième LT4 canaux de travail et les premier LP1, deuxième LP2 et troisième LP3 canaux de protection, de façon synchronisée par le dispositif DE.

Si l'un des canaux de travail LT1 à LT4 est défaillant mais qu'au moins deux des canaux de protection LP1 à LP3 ne sont pas défaillants, le noeud B va être en mesure de reconstituer le signal primaire qu'il n'a pas reçu à partir des signaux composites et des signaux primaires correctement reçus.

A cet effet, le dispositif DR selon ce deuxième mode de réalisation comprend des moyens de recombinaison (MR) intercalés entre les ports primaires et secondaire(s) de son noeud B et le module d'aiguillage MA. Ces moyens de recombinaison (MR) comprennent au moins un étage de porte(s) logique(s) chargée(s) de recombiner de façon synchronisée des signaux primaires et/ou secondaires. Trois exemples de groupes de fonction(s) de recombinaison, parmi tous ceux pouvant être mis en oeuvre par les moyens de recombinaison d'un dispositif DR du type de celui illustré sur la figure 5, vont maintenant être décrits en référence aux figures 8 à 10.

L'exemple illustré sur la figure 8 correspond à une situation dans laquelle le noeud récepteur (par exemple B) reçoit du noeud émetteur (par exemple A) le deuxième signal primaire d2 et le premier signal composite p1, mais pas le premier signal primaire d1. Dans ce cas, les moyens de recombinaison mettent en oeuvreun seul module de recombinaison MR11 pour reconstituer le premier signal primaire d1 qui n'est pas parvenu dans leur noeud. Pour ce faire, le module de recombinaison MR11 est une porte logique (chargée d'effectuer une opération logique de type OU exclusif (XOR)), qui reçoit en entrée le deuxième signal primaire d2 (reçu par un port primaire) et le premier signal composite p1 (reçu par un port secondaire) et délivre en sortie le premier signal primaire d1 reconstitué (d2 XOR p1 = d1).

L'exemple illustré sur la figure 9 correspond à une situation dans laquelle le noeud récepteur (par exemple B) reçoit du noeud émetteur (par exemple A) le deuxième signal primaire d2 et les deuxième p2 et troisième p3 signaux composites, mais ni le premier signal primaire d1 ni le premier signal composite p1. Dans ce cas, les moyens de recombinaison mettent en oeuvre deux modules de recombinaison MR12 et MR21, appartenant à deux étages consécutifs, pour reconstituer le premier signal primaire d1 qui n'est pas parvenu dans leur noeud.

Pour ce faire, le premier module de recombinaison MR12 est une porte logique (chargée d'effectuer une opération logique de type OU exclusif (XOR)) qui reçoit en entrée les deuxième p2 et troisième p3 signaux composites (reçus par des ports secondaires) et délivre en sortie le premier signal composite p1 (p2 XOR p3 = p1). Le second module de recombinaison MR21 est une porte logique (chargée d'effectuer une opération logique de type OU exclusif (XOR)), qui reçoit en entrée le deuxième signal primaire d2 (reçu par un port primaire) et le premier signal composite reconstitué p1 (délivré par la sortie du premier module de recombinaison MR12) et délivre en sortie le premier signal primaire d1 reconstitué (d2 XOR p1 = d1).

Dans cet exemple, les moyens de recombinaison de la figure 9 mettent donc en oeuvre un groupe de fonctions correspondant à la relation d1 = d2 XOR (P2 XOR p3).

L'exemple illustré sur la figure 10 correspond à une situation dans laquelle le noeud récepteur (par exemple B) reçoit du noeud émetteur (par exemple A) les deuxième d2, troisième d3 et quatrième d4 signaux primaires et le troisième signal composite p3, mais ni le premier signal primaire d1 ni les premier p1 et deuxième p2 signaux composites. Dans ce cas, les moyens de recombinaison mettent en oeuvre trois modules de recombinaison MR13, MR22 et MR31, appartenant à trois étages consécutifs, pour reconstituer le premier signal primaire d1 qui n'est pas parvenu dans leur noeud.

Pour ce faire, le premier module de recombinaison MR12 est une porte logique (chargée d'effectuer une opération logique de type OU exclusif (XOR)) qui reçoit en entrée les troisième d3 et quatrième d4 signaux primaires (reçus par des ports primaires) et délivre en sortie le deuxième signal composite p2 (d3 XOR d4 = p2). Le deuxième module de recombinaison MR22 est une porte logique (chargée d'effectuer une opération logique de type OU exclusif (XOR)) qui reçoit en entrée le deuxième signal composite reconstitué p2 (délivré par la sortie du premier module de recombinaison MR12) et le troisième signal composite p3 (reçu par un port secondaire) et délivre en sortie le premier signal composite p1 (p2 XOR p3 = p1). Le troisième module de recombinaison MR31 est une porte logique (chargée d'effectuer une opération logique de type OU exclusif (XOR)), qui reçoit en entrée le deuxième signal primaire d2 (reçu par un port primaire) et le premier signal composite reconstitué p1 (délivré par la sortie du premier module de recombinaison MR12) et délivre en sortie le premier signal primaire d1 reconstitué (d2 XOR p1 = d1).

Dans cet exemple, les moyens de recombinaison de la figure 10 mettent donc en oeuvre un groupe de fonctions correspondant à la relation d1 = d2 XOR (p3 XOR (d3 XOR d4)).

Dans l'exemple illustré sur la figure 11, les noeuds A et B sont connectés par l'intermédiaire de trois canaux de travail LT1 à LT3 et de trois canaux de protection LP1 à LP3. A cet effet, chaque noeud A, B comprend trois ports primaires connectés respectivement aux canaux de travail LT1, LT2 et LT3 et trois ports secondaires connectés respectivement aux canaux de protection LP1, LP2 et LP3. Le premier canal de travail LT1 est dédié au transport de premiers signaux primaires d1 représentatifs d'un premier flux de bits de données (trafic normal). Le deuxième canal de travail LT2 est dédié au transport de deuxièmes signaux primaires d2 représentatifs d'un second flux de bits de données (trafic normal). Le troisième canal de travail LT3 est dédié au transport de troisièmes signaux primaires d3 représentatifs d'un troisième flux de bits de données (trafic normal). Le premier canal de protection LP1 est dédié au transport de premiers signaux composites p1 représentatifs de bits de données résultant de la combinaison des bits de données représentés par des fractions de premier d1 et second d2 signaux primaires. Le deuxième canal de protection LP2 est dédié au transport de deuxièmes signaux composites p2 représentatifs de bits de données résultant de la combinaison des bits de données représentés par des fractions de premier d1 et troisième d3 signaux primaires. Le troisième canal de protection LP3 est dédié au transport de troisièmes signaux composites p3 représentatifs de bits de données résultant de la combinaison des bits de données représentés par des fractions de deuxième d2 et troisième d3 signaux primaires.

Dans cet exemple que l'on peut qualifier de collaboratif, et comme cela est illustré sur les figures 12 et 13, les moyens de combinaison (MC) du noeud A comprennent un unique étage de modules de combinaison (portes logiques) chargés chacun d'effectuer une opération de logique combinatoire.

Comme dans l'exemple précédemment décrit en référence aux figures 5 à 10, les opérations de logique combinatoire sont par exemple toutes de type OU exclusif (XOR).

On a schématiquement représenté sur la figure 12 un exemple de fonctions de combinaison de bits, d'une première part, des premier d1 et deuxième d2 signaux primaires au moyen d'une première porte logique MC11 chargée d'effectuer une opération logique de type OU exclusif (XOR) pour délivrer un premier signal composite p1 (d1 XOR d2 = p1), d'une deuxième part, des premier d1 et troisième d3 signaux primaires au moyen d'une deuxième porte logique MC12 chargée d'effectuer une opération logique de type OU exclusif (XOR) pour délivrer un second signal composite p2 (d1 XOR d3 = p2), et d'une troisième part, des deuxième d2 et troisième d3 signaux primaires au moyen d'une troisième porte logique MC13 chargée d'effectuer une opération logique de type OU exclusif (XOR) pour délivrer un troisième signal composite p3 (d2 XOR d3 = p3).

Plus précisément :
- la première porte logique MC11 reçoit en entrée les premier d1 et second d2 signaux primaires qui doivent être respectivement transportés par les premier LT1 et deuxième LT2 canaux de travail, et délivre en sortie un premier signal composite p1 devant être transporté par le premier canal de protection LP1,
- la deuxième porte logique MC12 reçoit en entrée les premier d1 et troisième d3 signaux primaires qui doivent être respectivement transportés par les premier LT1 et troisième LT3 canaux de travail, et délivre en sortie un deuxième signal composite p2 devant être transporté par le deuxième canal de protection LP2,
- la troisième porte logique MC13 reçoit en entrée les deuxième d2 et troisième d3 signaux primaires qui doivent être respectivement transportés par les deuxième LT2 et troisième LT3 canaux de travail, et délivre en sortie un troisième signal composite p3 devant être transporté par le troisième canal de protection LP3.

Pour mettre en oeuvre les fonctions de combinaison illustrées sur la figure 12, on peut par exemple utiliser un dispositif DE du type de celui illustré sur la figure 13. Dans cet exemple, le dispositif DE comprend de préférence :
- un coupleur C1, de type 1x3 (une entrée et trois sorties), alimenté en premier signal primaire d1 par le module d'aiguillage MA et délivrant sur ses trois sorties trois fractions complémentaires du premier signal primaire d1 reçu en entrée. Une première sortie est connectée à l'un des ports primaires pour alimenter en premier signal primaire d1 le premier canal de travail LT1, une deuxième sortie est connectée à une entrée de la première porte logique MC11 (du premier étage des moyens de combinaison), et une troisième sortie est connectée à une entrée de la deuxième porte logique MC12 (du premier étage des moyens de combinaison),
- un coupleur C2, de type 1x3, alimenté en deuxième signal primaire d2 par le module d'aiguillage MA et délivrant sur ses trois sorties trois fractions complémentaires du deuxième signal primaire d2 reçu en entrée. Une première sortie est connectée à l'un des ports primaires pour alimenter en deuxième signal primaire d2 le deuxième canal de travail LT2, une deuxième sortie est connectée à une entrée de la première porte logique MC11 (du premier étage des moyens de combinaison), et une troisième sortie est connectée à une entrée de la troisième porte logique MC13 (du premier étage des moyens de combinaison),
- un coupleur C3, de type 1x3, alimenté en troisième signal primaire d3 par le module d'aiguillage MA et délivrant sur ses trois sorties trois fractions complémentaires du troisième signal primaire d3 reçu en entrée. Une première sortie est connectée à l'un des ports primaires pour alimenter en troisième signal primaire d3 le troisième canal de travail LT3, une deuxième sortie est connectée à une entrée de la deuxième porte logique MC12 (du premier étage des moyens de combinaison), et une troisième sortie est connectée à une entrée de la troisième porte logique MC13 (du premier étage des moyens de combinaison).

Les premier d1, deuxième d2 et troisième d3 signaux primaires et les premier p1, deuxième p2 et troisième p3 signaux composites sont transmis du noeud A vers le noeud B via respectivement les premier LT1, deuxième LT2 et troisième LT3 canaux de travail et les premier LP1, deuxième LP2 et troisième LP3 canaux de protection, de façon synchronisée par le dispositif D.

Si l'un des canaux de travail LT1 à LT3 est défaillant mais qu'au moins deux des canaux de protection LP1 à LP3 ne sont pas défaillants, le noeud B va être en mesure de reconstituer le signal primaire qu'il n'a pas reçu à partir des signaux composites et des signaux primaires correctement reçus.

A cet effet, le dispositif DR selon ce troisième mode de réalisation comprend des moyens de recombinaison (MR) intercalés entre les ports primaires et secondaire(s) de son noeud B et le module d'aiguillage MA. Ces moyens de recombinaison (MR) comprennent par exemple deux étages de portes logiques chargées de recombiner de façon synchronisée des signaux primaires et/ou secondaires. Quatre exemples de groupes de fonctions de recombinaison, parmi tous ceux pouvant être mis en oeuvre par les moyens de recombinaison d'un dispositif DR du type de celui illustré sur la figure 11, vont maintenant être décrits en référence aux figures 8 et 14 à 16.

L'exemple illustré sur la figure 8 correspond à une situation dans laquelle le noeud récepteur (par exemple B) reçoit du noeud émetteur (par exemple A) le deuxième signal primaire d2 et le premier signal composite p1, mais pas le premier signal primaire d1. Dans ce cas, les moyens de recombinaison n'ont besoin que d'un seul module de recombinaison MR11 pour reconstituer le premier signal primaire d1 qui n'est pas parvenu dans leur noeud. Pour ce faire, le module de recombinaison MR11 est une porte logique (chargée d'effectuer une opération logique de type OU exclusif (XOR)), qui reçoit en entrée le deuxième signal primaire d2 (reçu par un port primaire) et le premier signal composite p1 (reçu par un port secondaire) et délivre en sortie le premier signal primaire d1 reconstitué (d2 XOR p1 = d1).

L'exemple illustré sur la figure 14 correspond à une situation dans laquelle le noeud récepteur (par exemple B) reçoit du noeud émetteur (par exemple A) le troisième signal primaire d3 et les premier p1 et deuxième p2 signaux composites, mais ni les premier d1 et deuxième d2 signaux primaires. Dans ce cas, les moyens de recombinaison ont besoin de deux modules de recombinaison MR12 et MR21, appartenant à deux étages consécutifs, pour reconstituer le premier signal primaire d1 qui n'est pas parvenu dans leur noeud.

Pour ce faire, le premier module de recombinaison MR12 est une porte logique (chargée d'effectuer une opération logique de type OU exclusif (XOR)) qui reçoit en entrée le troisième signal primaire d3 (reçu par un port primaire) et le troisième signal composite p3 (reçu par un port secondaire) et délivre en sortie le deuxième signal primaire d2 reconstitué (d3 XOR p3 = d2). Le second module de recombinaison MR21 est une porte logique (chargée d'effectuer une opération logique de type OU exclusif (XOR)), qui reçoit en entrée le deuxième signal primaire reconstitué d2 (délivré par la sortie du premier module de recombinaison MR12) et le premier signal composite p1 (reçu par un port secondaire) et délivre en sortie le premier signal primaire d1 reconstitué (d2 XOR p1 = d1).

Dans cet exemple, les moyens de recombinaison de la figure 14 mettent donc en oeuvre un groupe de fonctions correspondant à la relation d1 = p1 XOR (d3 XOR p3).

L'exemple illustré sur la figure 15 correspond à une situation dans laquelle le noeud récepteur (par exemple B) reçoit du noeud émetteur (par exemple A) le troisième signal primaire d3 et le deuxième signal composite p2, mais pas le premier signal primaire d1. Dans ce cas, les moyens de recombinaison n'ont besoin que d'un seul module de recombinaison MR11 pour reconstituer le premier signal primaire d1 qui n'est pas parvenu dans leur noeud. Pour ce faire, le module de recombinaison MR13 est une porte logique (chargée d'effectuer une opération logique de type OU exclusif (XOR)), qui reçoit en entrée le troisième signal primaire d3 (reçu par un port primaire) et le deuxième signal composite p2 (reçu par un port secondaire) et délivre en sortie le premier signal primaire d1 reconstitué (d3 XOR p2 = d1).

Du fait que chacun des signaux d1, d2 et d3 peut être récupéré à l'aide de deux paires de signaux indépendantes, par exemple d2 XOR p1 et d3 XOR p2 pour d1, le niveau de protection est renforcé.

L'exemple illustré sur la figure 16 correspond à une situation dans laquelle le noeud récepteur (par exemple B) reçoit du noeud émetteur (par exemple A) le deuxième signal primaire d2 et les deuxième p2 et troisième p3 signaux composites, mais ni le premier signal primaire ni le premier signal composite p1. Dans ce cas, les moyens de recombinaison ont besoin de deux modules de recombinaison MR14 et MR22, appartenant à deux étages consécutifs, pour reconstituer le premier signal primaire d1 qui n'est pas parvenu dans leur noeud.

Pour ce faire, le premier module de recombinaison MR14 est une porte logique (chargée d'effectuer une opération logique de type OU exclusif (XOR)) qui reçoit en entrée le deuxième signal primaire d2 (reçu par un port primaire) et le troisième signal composite p3 (reçu par un port secondaire) et délivre en sortie le troisième signal primaire d3 reconstitué (d2 XOR p3 = d3). Le second module de recombinaison MR22 est une porte logique (chargée d'effectuer une opération logique de type OU exclusif (XOR)), qui reçoit en entrée le troisième signal primaire reconstitué d3 (délivré par la sortie du premier module de recombinaison MR14) et le deuxième signal composite p2 (reçu par un port secondaire) et délivre en sortie le premier signal primaire d1 reconstitué (d3 XOR p2 = d1).

Dans cet exemple, les moyens de recombinaison de la figure 16 mettent donc en oeuvre un groupe de fonctions correspondant à la relation d1 = p2 XOR (d2 XOR p3).

Dans les exemples décrits, les combinaisons de signaux sont effectuées par un loi XOR qui est inversible. Par inversible, nous signifions qu'il est possible de retrouver de manière déterministe un signal Y lorsque l'on dispose du signal X et du signal Z=X XOR Y. Une autre loi inversible est « NOT XOR ». En revanche, une inversion déterministe n'est plus possible si la loi Ou exclusif est remplacée par la loi OU (non exclusif) ou par la loi ET. Néanmoins, il est possible de retrouver de manière déterministe le signal logique Y lorsque l'on dispose du signal X et du signal V=X OR Y et du signal W=X ET Y. Une protection des signaux X et Y par les signaux composites V et W est donc possible.

Bien entendu, l'exemple illustré sur la figure 11 peut être associé à des dispositifs D comportant des moyens de combinaison (beaucoup) plus complexes que ceux illustrés sur les figures 12 et 13. Dans ce cas, les moyens de recombinaison sont également (beaucoup) plus complexes que ceux illustrés sur les figures 8 et 14 à 16.

Par ailleurs, on peut envisager de très nombreux autres exemples d'interconnexion entre noeuds que ceux présentés ci-avant en référence aux figures 1, 5 et 11.

Le dispositif de combinaison DE et le dispositif de recombinaison DR, et notamment ses modules de combinaison MC et ses modules de recombinaison MR, peuvent être réalisés sous la forme de circuits électroniques, de modules logiciels (ou informatiques), ou d'une combinaison de circuits et de logiciels.

L'invention ne se limite pas aux modes de réalisation de dispositif de combinaison/recombinaison et de noeud décrits ci-avant, seulement à titre d'exemple, mais elle englobe toutes les variantes que pourra envisager l'homme de l'art dans le cadre des revendications ci-après.

Dans les revendications, les verbes « comprendre », « inclure » et « comporter » n'excluent pas la présence d'autres éléments ou étapes que ceux énoncés. Les articles « un » et « une » n'excluent pas la présence de plusieurs exemplaires ou occurrences de l'élément ou étape énoncé. Par ailleurs, lorsque des fonctions sont réalisées de manière électronique, il n'est pas exclu qu'un même processeur ou un même module électronique réalise plusieurs fonctions. Les chiffres de référence sont uniquement destinés à faciliter la compréhension des revendications et ne sauraient être interprétés comme une limitation des revendications.

## Revendications

1. Dispositif (DE) de combinaison de signaux représentatifs de flux de bits de données, pour un noeud (A) d'un réseau de communication, ledit noeud (A) comprenant au moins deux ports primaires couplés respectivement à au moins deux canaux de transmission dits de travail (LT1, LT2), au moins un port secondaire connecté à au moins un canal de transmission dit de protection (LP1), et des moyens d'aiguillage (MA) propres à aiguiller au moins deux flux respectivement vers lesdits ports primaires, **caractérisé en ce qu'**il comprend des moyens de combinaison (MC) intercalés entre lesdits moyens d'aiguillage (MA) et lesdits ports primaires et secondaire(s) et comportant au moins une porte logique (MC, MC11, MC12, MC13) agencée pour combiner de façon synchronisée une fraction d'une paire de signaux aiguillés vers deux ports primaires choisis, au moyen d'au moins une opération choisie de logique combinatoire, de manière à constituer un signal dit composite, représentatif de bits résultant de ladite combinaison des bits de données représentés par les fractions des signaux de ladite paire, et destiné à alimenter un port secondaire dédié.

2. Dispositif selon la revendication 1, **caractérisé en ce que** lesdits moyens de combinaison (MC) comprennent des portes logiques agencées sur au moins un premier étage et un second étage, ledit second étage comportant au moins une porte logique (MC2) agencée pour combiner de façon synchronisée une fraction d'une paire de signaux composites constitués par ledit premier étage au moyen d'au moins une opération choisie de logique combinatoire, de manière à constituer un signal composite, représentatif de bits résultant de ladite combinaison des bits composites représentés par les fractions des signaux composites de ladite paire, et destiné à alimenter un port secondaire dédié.

3. Dispositif (DR) de recombinaison de signaux représentatifs de flux de bits de données, pour un noeud (B) d'un réseau de communication, ledit noeud (B) comprenant au moins deux ports primaires couplés respectivement à au moins deux canaux de transmission dits de travail (LT1, LT2), au moins un port secondaire connecté à au moins un canal de transmission dit de protection (LP1), **caractérisé en ce qu'**il comprend des moyens de recombinaison (MR) comportant au moins une porte logique (MR, MR11, MR12, MR13, MR14) agencée pour recombiner de façon synchronisée des fractions d'un premier signal et d'un signal composite reçus par des ports primaire et secondaire choisis, au moyen d'au moins une opération choisie de logique combinatoire, de manière à reconstituer un second signal représentatif de bits, et/ou des fractions de premier et second signaux reçus par des ports primaires choisis, au moyen d'au moins une opération choisie de logique combinatoire, de manière à reconstituer un signal composite représentatif de bits, et/ou des fractions de premier et second signaux composites reçus par des ports secondaires choisis, au moyen d'au moins une opération choisie de logique combinatoire, de manière à reconstituer un troisième signal composite représentatif de bits.

4. Dispositif selon la revendication 3, **caractérisé en ce que** lesdits moyens de recombinaison (MR) comprennent des portes logiques agencées sur au moins un premier étage et un second étage, ledit second étage incluant au moins une porte logique (MR21, MR22) agencée pour recombiner de façon synchronisée, des fractions d'un premier signal reçu et d'un signal composite reconstitué par ledit premier étage (MR, MR11, MR12, MR13, MR14), au moyen d'au moins une opération choisie de logique combinatoire, de manière à reconstituer un second signal représentatif de bits, et/ou des fractions d'un premier signal composite reconstitué par ledit premier étage (MR, MR11, MR12, MR13, MR14) et d'un premier signal reçu par un port primaire choisi, au moyen d'au moins une opération choisie de logique combinatoire, de manière à reconstituer un second signal ou un second signal composite représentatif de bits, et/ou des fractions d'un signal composite reçu par un port secondaire choisi et d'un premier signal reconstitué par ledit premier étage (MR, MR11, MR12, MR13, MR14), au moyen d'au moins une opération choisie de logique combinatoire, de manière à reconstituer un second signal représentatif de bits.

5. Dispositif selon la revendication 4, **caractérisé en ce que** lesdits moyens de recombinaison (MR) comprennent au moins une porte logique (MR31) agencée sur un troisième étage pour combiner de façon synchronisée, des fractions d'un premier signal reçu et d'un signal composite reconstitué par ledit second étage (MR21, MR22), au moyen d'au moins une opération choisie de logique combinatoire, de manière à reconstituer un second signal représentatif de bits.

6. Dispositif selon l'une des revendications 1 à 5, **caractérisé en ce que** lesdites opérations de logique combinatoire sont choisies dans un groupe comprenant les opérations de type « OU exclusif », « NON », « ET » et « OU » et leurs combinaisons.

7. Dispositif selon la revendication 6, **caractérisé en ce que** lesdites opérations de logique combinatoire sont de type inversible.

8. Dispositif selon l'une des revendications 1 à 7, **caractérisé en ce que** chaque étage de porte(s) logique(s) (MR, MC) est agencé pour combiner chaque bit de la fraction de l'un des signaux d'une paire à un bit correspondant de la fraction de l'autre signal de ladite paire.

9. Dispositif selon l'une des revendications 1 à 7, **caractérisé en ce qu'**il comprend des moyens de groupement agencés pour décomposer lesdits flux en groupes de bits comportant un nombre choisi de bits, et **en ce que** chaque étage de porte(s) logique(s) est agencé pour (re)combiner chaque groupe de bits de la fraction de l'un des signaux, éventuellement composite, d'une paire à un groupe de bits correspondant de la fraction de l'autre signal, éventuellement composite, de ladite paire.

10. Procédé pour transmettre des signaux représentatifs de flux de bits de données de manière protégée à un noeud récepteur (B) par un réseau de communication, **caractérisé par** les étapes consistant à :
sélectionner un groupe à protéger comportant une pluralité de signaux représentatifs de bits de données (d1, d2) destinés à être transmis de manière protégée audit noeud récepteur,
former un groupe de protection, associé audit groupe à protéger, incluant au moins un signal composite de protection (p1), ledit groupe de protection étant obtenu en combinant de façon synchronisée, par une séquence logique de combinaison incluant au moins une opération choisie de logique combinatoire, chacun des signaux (d1, d2) dudit groupe à protéger avec un autre signal du groupe à protéger ou avec un signal composite précédemment obtenu du groupe de protection, ledit au moins un signal composite étant à chaque fois représentatif de bits résultant de ladite combinaison des bits de données représentés par les signaux soumis à ladite au moins une opération de logique combinatoire,
transmettre ledit au moins un signal composite dudit groupe de protection et lesdits signaux dudit groupe à protéger audit noeud récepteur (B) sur des canaux de transmission (LT1, LT2, LP1) du réseau de communication mutuellement séparés.

11. Procédé selon la revendication 10, **caractérisé par le fait que** ledit groupe de protection comporte au moins deux signaux composites (p1, p2) obtenus à partir d'un signal (d1) dudit groupe à protéger.

12. Procédé de récupération de données protégées pour un noeud récepteur (B) d'un réseau de communication, comprenant les étapes consistant à :
détecter une défaillance d'un canal de transmission (LT1) agencé pour transporter un signal représentatif de bits de données (d1) jusqu'au noeud récepteur (B),
identifier un groupe à protéger auquel appartient le signal transporté par le canal de transmission défaillant, ledit groupe à protéger incluant une pluralité de signaux (d1, d2, d3, d4) transportés par des canaux de transmission (LT1, LT2, LT3, LT4) connectés audit noeud récepteur,
identifier un groupe de protection associé audit groupe à protéger, ledit groupe de protection incluant au moins un signal composite de protection (p1, p2, p3) transporté par au moins un canal de transmission (LP1, LP2, LP3) connecté audit noeud récepteur, ledit au moins un signal composite de protection étant obtenu en amont dudit au moins un canal de transmission en combinant de façon synchronisée chacun des signaux dudit groupe à protéger, par au moins une opération choisie de logique combinatoire, avec un autre signal du groupe à protéger ou avec un signal composite précédemment obtenu du groupe de protection, ledit au moins un signal composite étant à chaque fois représentatif de bits résultant de ladite combinaison des bits de données représentés par les signaux soumis à ladite au moins une opération de logique combinatoire,
recombiner de façon synchronisée des signaux effectivement reçus par le noeud récepteur (B), s'il en existe, au moyen d'une séquence logique de recombinaison incluant au moins une opération choisie de logique combinatoire, lesdits signaux étant choisis parmi les signaux dudit groupe à protéger (d2, d3, d4) et dudit groupe de protection (p1, p2, p3), de manière à récupérer le signal (d1) transporté par le canal de transmission défaillant.
